# EUROPEAN PATENT SPECIFICATION

(11) **EP 0 865 235 B1**
(45) Date of publication and mention of the grant of the patent: **09.10.2002**
(21) Application number: 97934790.3
(22) Date of filing: 31.07.1997
(51) Int. Cl.: A01D 84/00, A01D 78/10, A01D 57/20

(54) **A MACHINE COMBINATION, A RAKE AND PICK-UP AND DISPLACING MEMBER, AS WELL AS A METHOD**
VERFAHREN UND MASCHINEKOMBINATION,RECHEN UND AUFNEHMER UND VERSETZUNGSELEMENT
MACHINE MIXTE ASSOCIANT UN RATEAU A UN ORGANE DE RAMASSAGE ET D'ENTRAINEMENT, ET PROCEDE CORRESPONDANT

(30) Priority: 06.08.1996 NL 1003745
(43) Date of publication of application: 23.09.1998
(73) Proprietor: MAASLAND N.V., 3155 PD Maasland (NL)
(72) Inventor: VAN DER LELY, Olaf, CH-6300 Zug (CH); VAN HEMERT, Norbert, NL-3067 CB Rotterdam (NL); VAN DEN ENGEL, Alfonsus, Jacobus, NL-3123 CM Schiedam (NL)
(74) Representative: Corten, Maurice Jean F.M.
(86) International application number: PCT/NL97/00451
(87) International publication number: WO 98/005195

(56) References cited:
- EP-A- 0 543 312
- EP-A- 0 706 751
- CA-A- 1 248 763
- GB-A- 2 077 562
- GB-A- 2 194 875
- GB-A- 2 215 971
- US-A- 2 168 266
- US-A- 2 751 745
- US-A- 5 272 860

## Description

The present invention relates inter alia to a machine combination for moving crop lying on the ground sidewards, as described in claim 1.

Such a machine is known from the leaflet "Vermeer Twin Rakes". By means of this machine, crop collected by two rake elements is brought together into a central windrow. For the purpose of processing beans, the machine disposes of the possibility to couple a pick-up device, which is drawn via a drawbar, to the rake. The crop is deposited on the ground, immediately behind the pick-up device, into a smaller windrow. The machine has the disadvantage that the number of windrows created is relatively large, so that following machines if any, such as bale presses or pick-up wagons, which usually have a larger capacity than rakes, are used inefficiently under certain circumstances. This drawback can be obviated e.g. by means of a rake which is known from European patent application EP-A-0 709 019, in that the rake members are arranged such that there is created a so-called side delivery rake. By means of this side delivery rake, the crop collected by two rake members can be deposited into a single windrow at the side of the machine. However, such a machine has the drawback that the distance over which the crop is moved over the ground by the rake members is very large, so that the risk of contamination of the crop is increased. This drawback occurs particularly with crops such as hay and silage, which are used as feed crops for animals, such as cows.

US-A-2,168,266 discloses a hay rake with a conveyor for continuously discharging the raked hay at both sides of the rake. EP-A-0 706 751 shows a rake which can be adjusted to generate a number of different swath configurations, the adjustment being performed solely by setting the orientation of the wheels.

The present invention has for its object to obtain a favourable machine or machine combination of the above-mentioned kind, by means of which, on the one hand, the number of windrows to be deposited per hectare is limited as much as possible and, on the other hand, the contamination of the crop is minimized. According to the invention, this is achieved by the features of the characterizing part of claim 1.

The invention will now be further explained with reference to the accompanying drawings, in which:
Figure 1 shows schematically, in plan view, a machine according to the invention, and
Figure 2 illustrates schematically an alternative construction and a method which can be realized by means of the machine according to the invention.

Corresponding elements in the drawings have been indicated by the same reference numerals. The invention is by no means restricted to the embodiments shown and described; they only serve to illustrate the inventive idea.

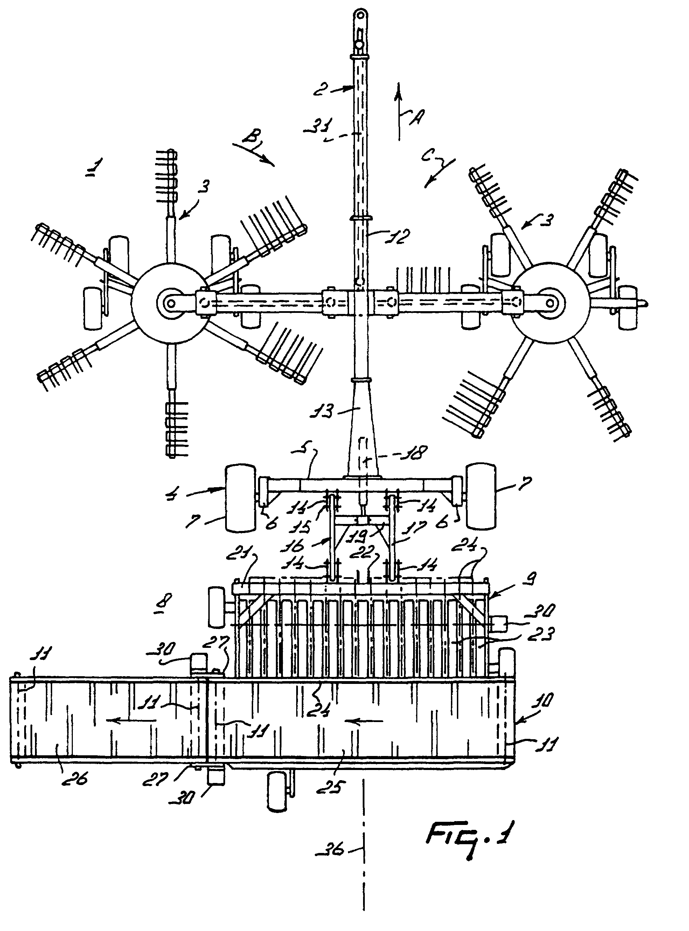

Figure 1 shows a machine combination of a rake 1 including a pick-up and displacing device 8. In the present embodiment, the latter is provided with a three-point linkage and is also applicable separately as a pick-up and displacing device 8. The rake 1 shown is provided with a drawbar 2 capable of being coupled with a tractor, which drawbar 2, near the rear side of the rotors 3, is supported by a wheel set 4. Via arms that are pivotably connected with the drawbar, the rotors are pivotable upwards into a transport position in which they are arranged substantially vertically. Each of the arms is capable of telescoping in such a manner that, measured horizontally and transversely to the direction of travel A, the outside of the windrow deposited by the rotors is located at one and a half metre at the most from the drawbar. The wheel set 4 includes a bridge 5 directed transversely to the direction of travel A, said bridge 5 being provided near its ends with downwardly extending supports 6 for wheels 7. In the drawing, the rake 1 is designed as a central delivery rake. The pick-up and displacing device 8 consists of a pick-up device 9, which comprises a pick-up device or "pick-up" known per se, and a displacing device 10 suitable for transporting laterally, i.e. transversely to the direction of travel A, crop picked up from the ground by the pick-up device 9. In the present embodiment, the displacing device is produced so as to include an endless flexible displacing element, drivable and rotatable about shafts 11 disposed in the direction of travel A, such as a chain including take-along elements, such as rods, disposed transversely to the direction of travel thereof, or a closed conveyor made of rubber or synthetic material, possibly provided with take-along profiles.

At least the rear half 12, 13 of the drawbar 2, at least from the portion where the imaginary circles described by the rotors 3 are approaching each other very closely, is located at such a height from the ground that the rake elements of a rotor and the crop raked can pass thereunder. For the linkage of the pick-up and displacing device 8, the bridge 5 is provided with lugs 14 in which there is included a hitch 16 by means of pivot shafts 15 extending horizontally and transversely to the direction of travel A. Said coupling device 16 is designed as a quadrangle hinge construction including two pairs of arms 17 located above each other. The coupling device 16 is pivotable upwardly and downwardly relative to the bridge 5 by means of an adjusting element 18, operable from the tractor, which, in this embodiment, is designed as a hydraulic cylinder and which is pivotably disposed here between the bridge 5 and a bracket 19 extending upwards from the lower coupling arms 17.

The pick-up and displacing device 8 comprises a frame including inter alia a frame beam 21 disposed transversely and at a considerable distance above the pick-up device 9. The coupling device 16 engages the frame via corresponding pairs of lugs 14 and pivot shafts 15. The pick-up and displacing device 8 is also provided with a centrally disposed upper pair of lugs 22, so that it is also adapted to be coupled to the three-point lifting hitch of a tractor. According to the invention, said provision also enables a combination in which a rake is coupled to the front lifting hitch and the pick-up and displacing device is mounted in the rear lifting hitch of a tractor.

Figure 1 shows the upper sides of guide strips 23, bent in a U-shape, between which strips 23 the tines of the pick-up are moving, by means of which tines the crop lying on the ground is lifted from the ground and pushed over the guide strips 23 in rearward direction to the displacing device 10. In a specific embodiment, the guide strips 23 adjoin with their rear ends a transversely extending frame portion 24 and the guide strips 23 are disposed at a slightly higher level than the upper side of the displacing element 25 of the displacing device 10, which is arranged therebehind.

The displacing device 10 preferably comprises two endless elements 25, 26, of which the first one extends horizontally and transversely, and properly adjacent to the pick-up device 9 in a proper manner. A second displacing element 26 is coupled with the first drive element via pivot arms 27 that are pivotable about the drive shafts of the displacing elements. The rounded off ends of the first and the second displacing element 25, 26, which are facing each other, are disposed during operation so as to overlap each other at least to some extent for enabling a proper transfer of crop from the first displacing element to the second one. For achieving a transport position, the second displacing element 26 and the arms 27 pivot together about a pivot shaft included in the first displacing element 25. For adjustment in height of the outer end, the second displacing element 26 is pivotable and adjustable about a pivot shaft included in the second displacing element 26 and coupled with the arms 27. In the embodiment shown, both pivotal axes coincide with an axis of rotation 11. The rotation shafts 11 preferably also constitute the drive shafts of the respective displacing elements 25, 26. The movement of the arms 27 relative to the frame of the relevant displacing element 25, 26 is capable of being locked near both ends of an arm 27. The displacing elements 25 and 26, as well as the pick-up device 9, are driven by means of hydraulic motors 30. In the above-described preferred embodiment, the hydraulic motors 30 are disposed at opposite sides of the two displacing elements 25, 26. Via a slide included in the machine transversely to the direction of travel, the displacing device 10 is movable relative to the pick-up device 9 and fixable into a number of desired positions in order to be able to adjust the place where the crop is deposited.

The pick-up and displacing device 8 is preferably provided with a (non-shown) hydraulic unit, which is driven via an extension of the drive shaft 31 which is provided on the rake 1 for the drive of the rotors 3 and which is capable of being coupled with the power take-off shaft of a tractor. According to the invention, to this end the rake 1 is provided with a gear box having a rearwardly directed power take-off shaft. Due to this, the drive of the rake can be passed on, e.g. via a coupling shaft, to a machine to be coupled with the rake 1, in this case a pick-up and displacing device 8. Therefore, the invention also relates to a rake 1, which is provided with coupling means for coupling a following machine and with a drive unit having a rearwardly directed power take-off shaft.

The function of the above-described construction is characterized in that crop lying about on the ground is raked by the rotors towards the middle of the machine and is deposited there into a windrow. This windrow is picked up from the ground by the pick-up 9 and is transported to a place outside the working width of the rake and deposited there. This has the advantage that the crop is displaced over the ground over half the working width of the rotors at the most. This limits the risk of contamination with earth or clods, i.e. loss of value of the crop, to a considerable extent, while furthermore the risk of loosing crop is limited. Nevertheless, by turning at the end of a working run, the machine is adapted to deposit the material raked of two working runs into one windrow. The latter possibility enables a very efficient use of following machines, e.g. bale presses or pick-up wagons. The machine has also the advantage that the rake can be used as a central delivery rake when desired, e.g. in case of a lighter tractor and an uncoupled pick-up and displacing device, thus enlarging the possibilities of using the machinery of contractors optimally and in a flexible manner.

In a preferred embodiment, the working width of the pick-up 9 at least almost corresponds to the legal transport width in many countries, which usually amounts to three metres. The construction in accordance with the invention further enables to deposit the crop collected by the two rotors into two windrows located at some distance from each other. According to the invention, these windrows can be deposited just within the imaginary lines, extending in the direction of travel, that indicate the maximum working width of the rake 1; because of the fixed orientation of the pick-up relative to the rotors, a complete picking up of the two windrows is guaranteed. Due to this, the working width of the rake included in the construction according to the invention can be increased by the distance between the windrows deposited by the two rotors; the unraked crop between the two windrows is still picked up by the pick-up. In this manner, the working width can be increased in practice by approximately one metre, i.e. more than 10%.

In a non-shown embodiment, the pick-up and displacing device can be connected with a tractor via a drawbar that is specifically designed for the purpose. The drawbar has a "cat's back", i.e. is designed in such a manner that it can reach from the frame beam 21 over a rake that is suspended in the three-point lifting hitch of a tractor and can easily be linked with a pivotable drawing point on the tractor. In this case, the pick-up and displacing machine is provided with running wheels which are coupled with its frame and are preferably arranged behind the displacing device 10 or thereunder. The drawbar is preferably connected pivotably about a vertical shaft with the frame 21, while an adjusting element, which is capable of being operated from the tractor, is disposed between the drawbar and the frame beam 21. By means of said adjusting element, the machine can be positioned behind the rake, either centrally behind a so-called central delivery rake including two or more rotors, e.g. known from EP-A-290 059, or next to a side delivery rake including one or more rotors. In the latter case, the second displacing element 26 is omitted or adjusted into an inoperative position, such that the collected crop is deposited immediately outside the working width of the machine combination. Such machine combinations, as described in the foregoing, have the advantage that it is possible to continue the use of existing rakes while increasing their capacity in a favourable manner.

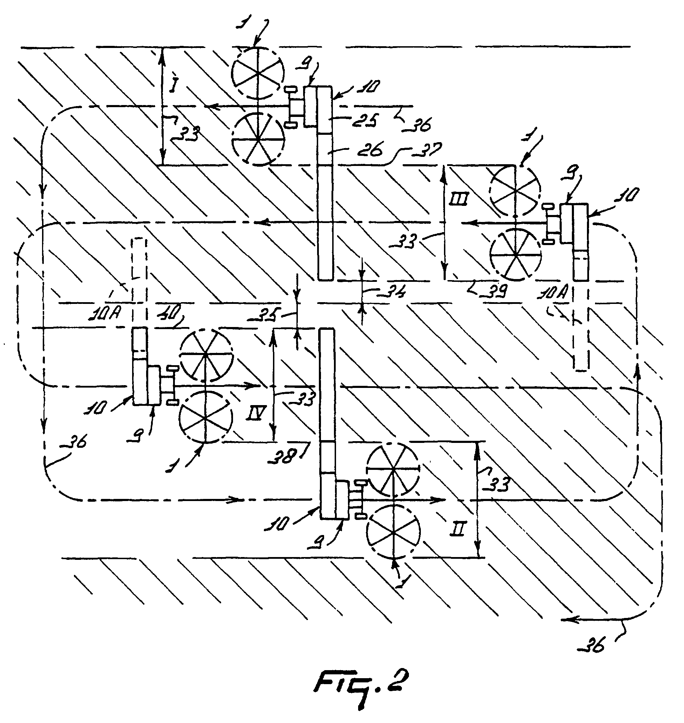

In again an other embodiment of the invention, the earlier described embodiments, such as schematically shown in Figure 2, may be provided with a displacing device 10 which has been extended in such a way that the crop picked up can be deposited over a distance of at least one working width of the machine outside the rake width of the machine. The extension of the displacing device is supported in a non-shown manner by means of a supporting construction, constituted e.g. by ropes capable of being pulled in, which are kept at a certain height by means of an installation disposed on the displacing device 10. Near the boundary of the working width of the rake, by means of arms 27 which are produced as longer ones than in the previous embodiment, the extension can be pivoted hydraulically into an inoperative position above at least the end of the displacing element 26. In this position of the displacing device, shown in dashed lines by 10A in Figure 2, the crop picked up is deposited immediately beside the boundary of the working strip of the machine. In this position, the machine always carries out a working run along the windrow strips 34 and 35 which are adjacent to each other. Figure 2 furthermore illustrates a method in which the crop collected in four working runs, indicated by Roman numerals I-IV, is deposited into one single windrow 34, 35. In this method there are preferably carried out two consecutive working runs, without an adjustment of the extension into or out of the operative position being required. The extension is preferably adjusted in the first and the second working run. Of course, the embodiment shown in Figure 2 of a method in which the pick-up and displacing device 8 is used can also be applied in combination with one of the earlier mentioned types of rakes.

The invention furthermore relates to:
a machine combination in which the displacing device (10), which comprises displacing elements (25, 26), is adapted to deposit the crop near the boundary (37 - 40) of a strip of ground (I-IV) that has been worked by the first machine (1);
a machine combination in which the crop is moved sidewards by the second machine (8) and is deposited by said machine (8) outside the strip of ground that has been worked by the first machine (1);
a machine combination in which the crop is deposited by the second machine (8) at a place adjacent to the strip of ground that has been worked by the first machine (1);
a machine combination in which the crop is deposited at a distance, corresponding at least to the working width of the first machine (1), outside the strip of ground that has been worked by the first machine (1);
a machine combination in which the second machine (8) is provided with coupling means suitable for coupling to the first machine (1) or suitable for coupling to the rear lifting hitch of a tractor;
a machine combination in which the first machine (1) is constituted by a rake including at least one rake member (3) that is rotatable about an upwardly extending shaft;
a machine combination in which the displacing device (10) has such dimensions that the crop picked up can be moved sidewards at least over the working width of one rake member (3);
a machine combination in which at least the second machine (8) is provided with coupling or pivot means with the aid of which the second machine (8), at least during operation, is fixedly positioned in the lateral direction of the combination relative to the first machine;
a machine combination in which the displacing device (10) has such dimensions that material picked-up can be moved sidewards at least over a distance, corresponding at least almost to the working width of the first machine, beyond a lateral boundary;
a machine combination in which the displacing device (10) is adjustable in lateral direction relative to the pick-up device (9);
a machine combination in which the first machine is a central delivery rake, in particular a motor-driven rake (1);
a machine combination in which the first machine (1) comprises a frame (2) which is supported behind the rake members (3) by a wheel set (4) and which machine (1) is provided near its rear end with coupling means (14 - 19) for coupling the second machine (8).
a machine combination in which the first machine (1) is provided with a gear box having a preferably rearwardly directed power take-off shaft;
a machine combination in which the second machine (8) can be put into and out of operation;
a machine combination in which the coupling means (14 - 19) comprise an adjusting element (18) for putting the second machine (8) into and out of operation;
a machine combination in which the pick-up means (9) are arranged between two rake members (3) rotating in opposite directions, in particular centrally therebetween;
a machine combination in which the displacing device (10) comprises at least one endless displacing element (25, 26) in the form of a motor-driven flexible one;
a machine combination in which the machine combination comprises a first machine (1), which is capable of being coupled to the front lifting hitch of a tractor, and a second machine (8), which can be coupled to the rear lifting hitch of this tractor;
a machine combination in which the machine combination is constituted by a machine (1), which is capable of being coupled to the rear of a tractor, and a second machine (8), which is capable of being coupled to the rake.

The invention is not restricted to the aforementioned description, but also relates to all the details in the drawings. The invention furthermore relates to all sorts of alternatives in the construction, of course, being within the scope of the following claims.

## Claims

1. A machine combination for moving crop lying on the ground sidewards, including a first machine (1) for raking crop and a second machine (8) provided with pick-up means (9) for picking up crop raked by the first machine (1) from the ground during operation, whereby the first machine (1) is constituted by a rake including at least one rake member (3) that is rotatable about an upwardly extending shaft and the second machine (8) comprises a displacing device (10) for displacing the crop picked up transversely to the direction of travel (A).

2. A machine combination as claimed in claim 1, **characterized in that** the displacing device (10), which comprises displacing elements (25, 26), is adapted to deposit the crop near the boundary (37 - 40) of a strip of ground (I-IV) that has been worked by the first machine (1).

3. A machine combination as claimed in any one of the preceding claims, **characterized in that** the crop is moved sidewards by the second machine (8) and is deposited by said machine (8) outside the strip of ground that has been worked by the first machine (1).

4. A machine combination as claimed in claim 3, **characterized in that** the crop is deposited by the second machine (8) at a place adjacent to the strip of ground that has been worked by the first machine (1).

5. A machine combination as claimed in claim 3, **characterized in that** the crop is deposited at a distance, corresponding at least to the working width of the first machine (1), outside the strip of ground that has been worked by the first machine (1).

6. A machine combination as claimed in any one of the preceding claims, **characterized in that** the second machine (8) is provided with coupling means suitable for coupling to the first machine (1) or suitable for coupling to the rear lifting hitch of a tractor.

7. A machine combination as claimed in any one of the preceding claims, **characterized in that** the displacing device (10) has such dimensions that the crop picked up can be moved sidewards at least over the working width of one rake member (3).

8. A machine combination as claimed in any one of the preceding claims, **characterized in that** at least the second machine (8) is provided with coupling or pivot means with the aid of which the second machine (8), at least during operation, is fixedly positioned in the lateral direction of the combination relative to the first machine.

9. A machine combination as claimed in any one of the preceding claims, **characterized in that** the displacing device (10) has such dimensions that material picked-up can be moved sidewards at least over a distance, corresponding at least almost to the working width of the first machine, beyond a lateral boundary.

10. A machine combination as claimed in any one of the preceding claims, **characterized in that** the displacing device (10) is adjustable in lateral direction relative to the pick-up device (9).

11. A machine combination as claimed in any one of the preceding claims, **characterized in that** the first machine is a central delivery rake, in particular a motor-driven rake (1).

12. A machine combination as claimed in any one of the preceding claims, **characterized in that** the first machine (1) comprises a frame (2) which is supported behind the rake members (3) by a wheel set (4) and which machine (1) is provided near its rear end with coupling means (14 - 19) for coupling the second machine (8).

13. A machine combination as claimed in any one of the preceding claims, **characterized in that** the first machine (1) is provided with a gear box having a preferably rearwardly directed power take-off shaft.

14. A machine combination as claimed in any one of the preceding claims, **characterized in that** the second machine (8) can be put into and out of operation.

15. A machine combination as claimed in claim 14, **characterized in that** the coupling means (14 - 19) comprise an adjusting element (18) for putting the second machine (8) into and out of operation.

16. A machine combination as claimed in any one of the preceding claims, **characterized in that** the pick-up means (9) are arranged between two rake members (3) rotating in opposite directions, in particular centrally therebetween.

17. A machine combination as claimed in any one of the preceding claims, **characterized in that** the displacing device (10) comprises at least one endless displacing element (25, 26) in the form of a motor-driven flexible one.

18. A machine combination as claimed in any one of the preceding claims, **characterized in that** the machine combination comprises a first machine (1), which is capable of being coupled to the front lifting hitch of a tractor, and a second machine (8), which can be coupled to the rear lifting hitch of this tractor.

19. A machine combination as claimed in any one of the preceding claims 1 - 17, **characterized in that** the machine combination is constituted by a machine (1), which is capable of being coupled to the rear of a tractor, and a second machine (8), which is capable of being coupled to the rake.

20. A rake suitable for being applied in a machine combination and as described in any one of the preceding claims.

21. A pick-up and displacing machine as described in any one of the preceding claims.

22. A method of collecting crop, in which crop is collected in forming a windrow by a first machine and, in the same working run, the crop collected is picked up and subsequently moved sidewards by a second, following machine, whereby the picked-up crop is displaced transversely to the direction of travel (A) of the machines and deposited by the second machine.

## Patentansprüche

1. Maschinenkombination zum Seitwärtsbewegen von auf dem Boden liegendem Erntegut mit einer ersten Maschine (1) zum Rechen von Gut und einer zweiten Maschine (8) mit Aufnahmevorrichtungen (9), um im Betrieb von der ersten Maschine (1) gerechtes Gut vom Boden aufzunehmen, wobei die erste Maschine (1) durch einen Rechen mit mindestens einem Rechkörper (3) gebildet ist, der um eine aufwärts gerichtete Achse drehbar ist, und die zweite Maschine (8) eine Verlagerungsvorrichtung (10) umfaßt, um das aufgenommene Gut quer zur Arbeitsrichtung (A) zu verlagern.

2. Maschinenkombination nach Anspruch 1,
**dadurch gekennzeichnet, daß** die Verlagerungsvorrichtung (10), die Verlagerungselemente (25, 26) umfaßt, dazu ausgebildet ist, das Gut nahe der Begrenzung (37 bis 40) eines Bodenstreifens (I bis IV) abzulegen, der von der ersten Maschine (1) bearbeitet worden ist.

3. Maschinenkombination nach einem der vorhergehenden Ansprüche,
**dadurch gekennzeichnet, daß** das Gut von der zweiten Maschine (8) seitwärts bewegt und von der zweiten Maschine (8) außerhalb des Bodenstreifens abgelegt wird, der von der ersten Maschine (1) bearbeitet worden ist.

4. Maschinenkombination nach Anspruch 3,
**dadurch gekennzeichnet, daß** das Gut von der zweiten Maschine (8) an einer Stelle abgelegt wird, die an den Bodenstreifen angrenzt, der von der ersten Maschine (1) bearbeitet worden ist.

5. Maschinenkombination nach Anspruch 3,
**dadurch gekennzeichnet, daß** das Gut in einem Abstand, der mindestens der Arbeitsbreite der ersten Maschine (1) entspricht, außerhalb des Bodenstreifens abgelegt wird, der von der ersten Maschine (1) bearbeitet worden ist.

6. Maschinenkombination nach einem der vorhergehenden Ansprüche,
**dadurch gekennzeichnet, daß** die zweite Maschine (8) mit Anschlußvorrichtungen versehen ist, die sich zum Anschließen an die erste Maschine (1) oder zum Anschließen an die heckseitige Hebevorrichtung eines Schleppers eignen.

7. Maschinenkombination nach einem der vorhergehenden Ansprüche,
**dadurch gekennzeichnet, daß** die Verlagerungsvorrichtung (10) solche Abmessungen aufweist, daß das aufgenommene Gut zumindest über die Arbeitsbreite eines Rechkörpers (3) seitwärts bewegt werden kann.

8. Maschinenkombination nach einem der vorhergehenden Ansprüche,
**dadurch gekennzeichnet, daß** zumindest die zweite Maschine (8) mit Anschluß- oder Schwenkvorrichtungen versehen ist, mit deren Hilfe die zweite Maschine (8) zumindest im Betrieb in Querrichtung der Kombination relativ zu der ersten Maschine in ihrer Lage festgelegt ist.

9. Maschinenkombination nach einem der vorhergehenden Ansprüche,
**dadurch gekennzeichnet, daß** die Verlagerungsvorrichtung (10) solche Abmessungen aufweist, daß aufgenommenes Gut zumindest über eine Distanz, die zumindest annähernd der Arbeitsbreite der ersten Maschine entspricht, über eine seitliche Begrenzung hinaus seitwärts bewegt werden kann.

10. Maschinenkombination nach einem der vorhergehenden Ansprüche,
**dadurch gekennzeichnet, daß** die Verlagerungsvorrichtung (10) in Seitwärtsrichtung relativ zu der Aufnahmevorrichtung (9) einstellbar ist.

11. Maschinenkombination nach einem der vorhergehenden Ansprüche,
**dadurch gekennzeichnet, daß** die erste Maschine ein Schwader mit Zentralablage, insbesondere ein motorisch angetriebener Rechen (1) ist.

12. Maschinenkombination nach einem der vorhergehenden Ansprüche,
**dadurch gekennzeichnet, daß** die erste Maschine (1) einen Rahmen (2) umfaßt, der hinter den Rechkörpern (3) durch einen Satz Räder (4) abgestützt ist, und daß die Maschine (1) nahe ihrem hinteren Ende mit Anschlußvorrichtungen (14 bis 19) zum Anschließen der zweiten Maschine (8) versehen ist.

13. Maschinenkombination nach einem der vorhergehenden Ansprüche,
**dadurch gekennzeichnet, daß** die erste Maschine (1) mit einem Getriebe versehen ist, das eine vorzugsweise nach hinten gerichtete Zapfwelle aufweist.

14. Maschinenkombination nach einem der vorhergehenden Ansprüche,
**dadurch gekennzeichnet, daß** die zweite Maschine (8) in und außer Betrieb gesetzt werden kann.

15. Maschinenkombination nach Anspruch 14,
**dadurch gekennzeichnet, daß** die Anschlußvorrichtungen (14 bis 19) ein Stellglied (18) umfassen, um die zweite Maschine (8) in und außer Betrieb zu setzen.

16. Maschinenkombination nach einem der vorhergehenden Ansprüche,
**dadurch gekennzeichnet, daß** die Aufnahmevorrichtung (9) zwischen zwei sich in entgegengesetzten Richtungen drehenden Rechkörpern (3), insbesondere mittig zwischen diesen angeordnet ist.

17. Maschinenkombination nach einem der vorhergehenden Ansprüche,
**dadurch gekennzeichnet, daß** die Verlagerungsvorrichtung (10) mindestens ein endloses Verlagerungselement (25, 26) umfaßt, das in Form eines motorisch angetriebenen, flexiblen Verlagerungselementes ausgebildet ist.

18. Maschinenkombination nach einem der vorhergehenden Ansprüche,
**dadurch gekennzeichnet, daß** die Maschinenkombination eine erste Maschine (1), die an die frontseitige Hebevorrichtung eines Schleppers anschließbar ist, und eine zweite Maschine (8) umfaßt, die an die heckseitige Hebevorrichtung dieses Schleppers anschließbar ist.

19. Maschinenkombination nach einem der vorhergehenden Ansprüche 1 bis 17,
**dadurch gekennzeichnet, daß** die Maschinenkombination durch eine Maschine (1), die an das Heck eines Schleppers anschließbar ist, und eine zweite Maschine (8) gebildet ist, die an den Rechen anschließbar ist.

20. Rechen zur Verwendung in einer Maschinenkombination und gemäß einem der vorhergehenden Ansprüche.

21. Aufnahme- und Verlagerungsmaschine gemäß einem der vorhergehenden Ansprüche.

22. Verfahren zum Zusammenführen von Gut, bei dem Gut derart zusammengeführt wird, daß von einer ersten Maschine ein Schwad gebildet wird und in demselben Arbeitsgang das zusammengeführte Gut von einer zweiten, nachfolgenden Maschine aufgenommen und anschließend seitwärts bewegt wird, wobei das aufgenommene Gut quer zur Arbeitsrichtung (A) der Maschinen verlagert und von der zweiten Maschine abgelegt wird.

## Revendications

1. Machine mixte pour déplacer latéralement une récolte reposant sur le sol, comprenant une première machine (1) pour ratisser la récolte et une seconde machine (8) munie de moyens de ramassage (9) pour ramasser la récolte ratissée par la première machine 1 à partir du sol durant le fonctionnement, moyennant quoi la première machine (1) est constituée par un râteau comprenant au moins un élément formant râteau 3 qui peut tourner autour d'un arbre s'étendant vers le haut et la seconde machine (8) comprend un dispositif de déplacement (10) pour déplacer la récolte ramassée transversalement par rapport à la direction de déplacement (A).

2. Machine mixte selon la revendication 1, **caractérisée en ce que** le dispositif de déplacement (10), qui comprend des éléments de déplacement (25, 26), est adapté pour déposer la récolte à proximité de la limite (37 - 40) d'une ligne de terre (I à IV) qui a été réalisée par la première machine (1).

3. Machine mixte selon l'une quelconque des revendications précédentes, **caractérisée en ce que** la récolte est déplacée de manière latérale par la seconde machine (8) et est déposée par ladite machine (8) à l'extérieur de la ligne de terre qui a été réalisée par la première machine (1).

4. Machine mixte selon la revendication 3, **caractérisée en ce que** la récolte est déposée par la seconde machine (8) à un endroit adjacent à la ligne de terre qui a été réalisée par la première machine (1).

5. Machine mixte selon la revendication 3, **caractérisée en ce que** la récolte est déposée à une certaine distance, correspondant au moins à la largeur de travail de la première machine (1), à l'extérieur de la ligne de terre qui a été réalisée par la première machine (1).

6. Machine mixte selon l'une quelconque des revendications précédentes, **caractérisée en ce que** la seconde machine (8) est munie de moyens de couplage adaptés pour être couplés à la première machine (1) ou adaptés pour être couplés à un crochet d'attelage élévateur arrière d'un tracteur.

7. Machine mixte selon l'une quelconque des revendications précédentes, **caractérisée en ce que** le dispositif de déplacement (10) a des dimensions telles que la récole ramassée peut être déplacée latéralement au moins sur la largeur de travail d'un élément formant râteau (3).

8. Machine mixte selon l'une quelconque des revendications précédentes, **caractérisée en ce qu'**au moins la seconde machine (8) est munie de moyens de couplage ou de pivotement à l'aide desquels la seconde machine (8), au moins durant le fonctionnement, est positionnée de manière fixe dans la direction latérale de la machine mixte par rapport à la première machine.

9. Machine mixte selon l'une quelconque des revendications précédentes, **caractérisée en ce que** le dispositif de déplacement (10) a des dimensions telles que le matériau ramassé peut être déplacé latéralement au moins sur une certaine distance, correspondant au moins pratiquement à la largeur de travail de la première machine, au-delà d'une limite latérale.

10. Machine mixte selon l'une quelconque des revendications précédentes, **caractérisée en ce que** le dispositif de déplacement (10) peut être ajusté dans une direction latérale par rapport au dispositif de ramassage (9).

11. Machine mixte selon l'une quelconque des revendications précédentes, **caractérisée en ce que** la première machine est un râteau-andaineur à décharge centrale, en particulier un râteau entraîné par moteur (1).

12. Machine mixte selon l'une quelconque des revendications précédentes, **caractérisée en ce que** la première machine (1) comprend un châssis (2) qui est supporté derrière les éléments formant râteaux (3) par un essieu monté (4), laquelle première machine (1) est munie à proximité de son extrémité arrière de moyens de couplage (14 - 19) pour coupler la seconde machine (8).

13. Machine mixte selon l'une quelconque des revendications précédentes, **caractérisée en ce que** la première machine (1) est munie d'une boîte de transmission ayant un arbre de prise de force dirigé de préférence vers l'arrière.

14. Machine mixte selon l'une quelconque des revendications précédentes, **caractérisée en ce que** la seconde machine (8) peut être mise en fonctionnement et hors fonctionnement.

15. Machine mixte selon la revendication 14, **caractérisée en ce que** les moyens de couplage (14 - 19) comprennent un élément d'ajustement (18) pour mettre la seconde machine (8) en et hors fonctionnement.

16. Machine mixte selon l'une quelconque des revendications précédentes, **caractérisée en ce que** les moyens de ramassage (9) sont disposés entre deux éléments formant râteaux (3) tournant dans des directions opposées, en particulier de manière centrale entre ceux-ci.

17. Machine mixte selon l'une quelconque des revendications précédentes, **caractérisée en ce que** le dispositif de déplacement (10) comprend au moins un élément de déplacement sans fin (25, 26) sous la forme d'un élément flexible entraîné par moteur.

18. Machine mixte selon l'une quelconque des revendications précédentes, **caractérisée en ce que** la machine mixte comprend une première machine (1), qui peut être couplée au crochet d'attelage élévateur avant d'un tracteur, et une seconde machine (8), qui peut être couplée au crochet d'attelage élévateur arrière de ce tracteur.

19. Machine mixte selon l'une quelconque des revendications 1 à 17, **caractérisée en ce que** la machine mixte est constituée d'une machine (1), qui peut être couplée à l'arrière d'un tracteur, et d'une seconde machine (8) qui peut être couplée au râteau.

20. Râteau adapté pour être appliqué dans une machine mixte et qui est tel que décrit dans l'une quelconque des revendications précédentes.

21. Machine de ramassage et de déplacement telle que décrite dans l'une quelconque des revendications précédentes.

22. Procédé de collecte de récolte, dans lequel la récolte est collectée en formant un andain par une première machine et, dans le même passage de travail, la récolte collectée est ramassée puis déplacée latéralement par une seconde machine suivante, moyennant quoi la récolte ramassée est déplacée de manière transversale par rapport à la direction de déplacement (A) des machines, et déposée par la seconde machine.
